# EUROPEAN PATENT SPECIFICATION

(11) **EP 2 537 706 B1**
(45) Date of publication and mention of the grant of the patent: **23.04.2014**
(21) Application number: 11171023.2
(22) Date of filing: 22.06.2011
(51) Int. Cl.: B60N 3/02, B60N 3/10

(54) **Internal handle of a vehicle cabin, in particular of an industrial or commercial vehicle**
Innengriff für eine Fahrzeugkabine, insbesondere für Industrie- oder Nutzfahrzeuge
Poignée interne de cabine de véhicule, en particulier pour un véhicule industriel ou commercial

(43) Date of publication of application: 26.12.2012
(73) Proprietor: IVECO S.p.A., 10156 Torino (IT)
(72) Inventor: Armigliato, Marco, 10153 TORINO (IT); Bruno, Giuseppe, 10129 TORINO (IT)
(74) Representative: Cinquantini, Bruno

(56) References cited:
- DE-A1-102009 017 407
- FR-A1- 2 916 704
- GB-A- 2 463 058
- US-A- 2 510 545
- US-A- 5 104 184
- US-A1- 2004 217 247

## Description

### Field of the prior art

The present invention refers to the field of internal furnishings of industrial and commercial vehicles. In particular it refers to an internal handle of a vehicle cabin.

### Description of the prior art

Dimensioning vehicle furnishing, especially for industrial vehicles, is extremely complex, because it has to occupy little space, without penalizing comfort and functionality. Retractable tables and food containers are dimensioned and arranged so that they do not clutter up the vehicle cabin. A solution known is, for example, to arrange a food container, possibly refrigerated, under a bed arranged behind the driver's seat, transversal to the direction of travel of the vehicle. Such container is equipped with sliding guides, or rails, in order to move it forward, towards the direction of travel, and access to its inside, and to move it back to the retracted position, even completely under the bed, when it is not necessary to access to its inside.

In such context it is complex to arrange handles, holders and furnishing which do not clutter the cabin up when not in use. It is even more complex to arrange parts that can perform more than one task in order to limit the number of components inside the vehicle cabin and their respective bulk.

Holding devices conceived for bottles inside vehicles are known, for example, from GB 2463058 A or US-A-2 510 545.

### Summary of the invention

Therefore the aim of the present invention is to provide a handle suitable for at least a further function in addition to the handle function, in order to limit the number of components inside the vehicle cabin, but without limiting the comfort functionalities required and without increasing the bulk of the components, obtaining more free space inside the vehicle cabin.

It is object of the present invention an internal handle of a vehicle cabin, in particular of an industrial or commercial vehicle, according to claim 1.

The handle can move from an open position to a closed position. Preferably, the lying plane of the middle grip part, with the handle in the open position, is parallel to a surface comprised by said part of the vehicle cabin to which the handle is suitable to be hinged.

Moreover, according to the assembly position of the handle with respect to the part of the vehicle cabin, the flanges may be retroverted, so that in open position the lying plane of the middle grip part is parallel to said surface of the cabin. Thus, advantageously, the handle indicated by the present invention has a twofold function: defining a retractable handle and defining a bottle holder, comprised in the space between the handle and the part of the vehicle cabin to which the handle is suitable to be associated.

As an alternative, the middle grip part may comprise a shaped element in order to define one or more bottle holder seats, so that it is not necessary that said lying plane is perfectly parallel to said surface of the vehicle cabin when the handle is open.

Moreover the handle is ready to be applied to different internal parts of the cabin and to different vehicle containers.

It is also object of the present invention a movable container provided with an aforementioned handle according to claim 6.

Preferably such container is a food container and preferably it is refrigerated or it is a fridge.

Another aim of the present invention is to indicate a vehicle arrangement suitable to minimize the internal bulk and to maximize the comfort inside the vehicle cabin, in particular of an industrial or commercial vehicle.

It is particular the object of the present invention a vehicle cabin and a respective industrial or commercial vehicle, as described more fully in the claims, which are an integral part of the present disclosure.

### Brief description of the Figures

Further purposes and advantages of this invention will become clear from the following detailed description of a preferred embodiment and from the drawings that are attached hereto that are merely illustrative and not limitative, in which:
figure 1 shows a perspective view of a handle according to the present invention,
figures 2, 3 and 4 show side views of an application of the handle of figure 1 at a vehicle food container; figures show the possible usage configurations of the handle,
figures 5, 6 and 7 show perspective views corresponding respectively to figures 2 - 4,
figure 8 show a perspective view in partial transparency of a vehicle cabin of an industrial or commercial vehicle comprising a food container equipped with the handle of the present invention according to the previous figures.

In the figures the same reference numbers and letters identify the same elements or components.

### Detailed description of preferred embodiments of the invention

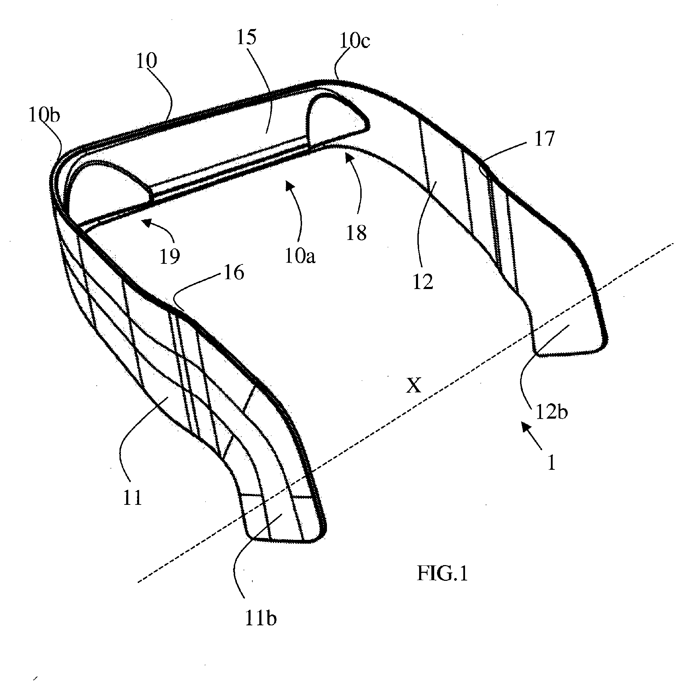

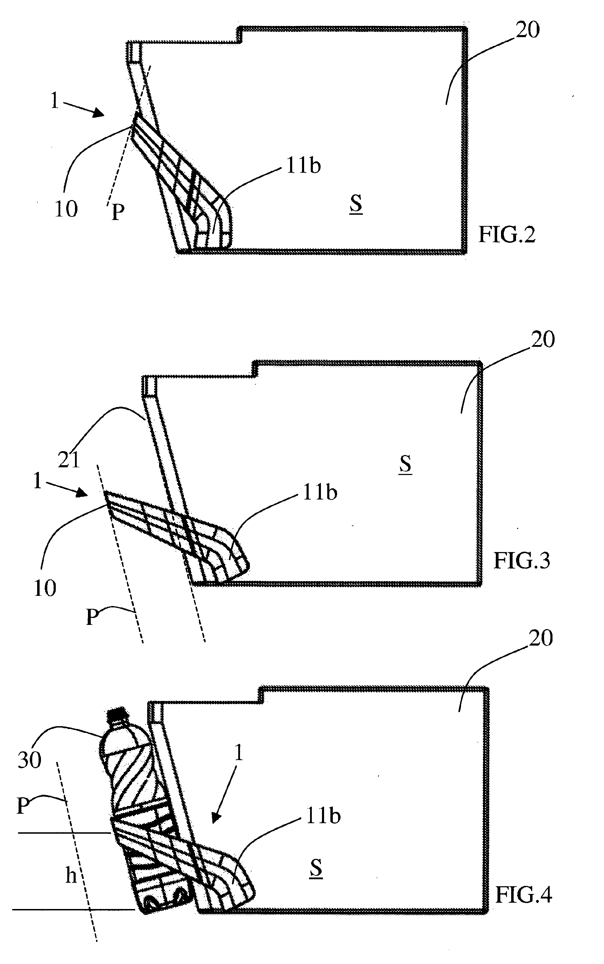

With particular reference to figure 1, a handle according to the present invention is substantially U-shaped with a middle grip part 10 longitudinally shaped, whose opposite ends 10b, 10c are connected to connection flanges 11 and 12 in a substantially parallel way between each other. The connection flanges are themselves longitudinally shaped and lie on planes perpendicular to a lying plane P defined by the middle grip part 10. According to the preferred alternative embodiment shown in the figures, comparing figure 1 with figures 2 - 4, it can be seen that the middle grip part 10 defines the lying plane P and that the connection flanges are retroverted with respect to such plane P, namely they are not perpendicular to the lying plane P, with a deviation angle with respect to the direction perpendicular to P comprised preferably between 1° and 50°.

As it will be explained below, such deviation may be varied so that when the handle is in open position, such lying plane is parallel to a vehicle surface 21 opposite to such middle grip part 10. Thus a space for holding bottles 30 is defined.

In particular, the flanges extend accordingly with each other, and their respective free ends 10b and 11b are arched in the aforementioned parallel planes where the flanges lie.

**The** handle that is object of the present invention **can also be** similar to eyeglass frames with their respective side-pieces.

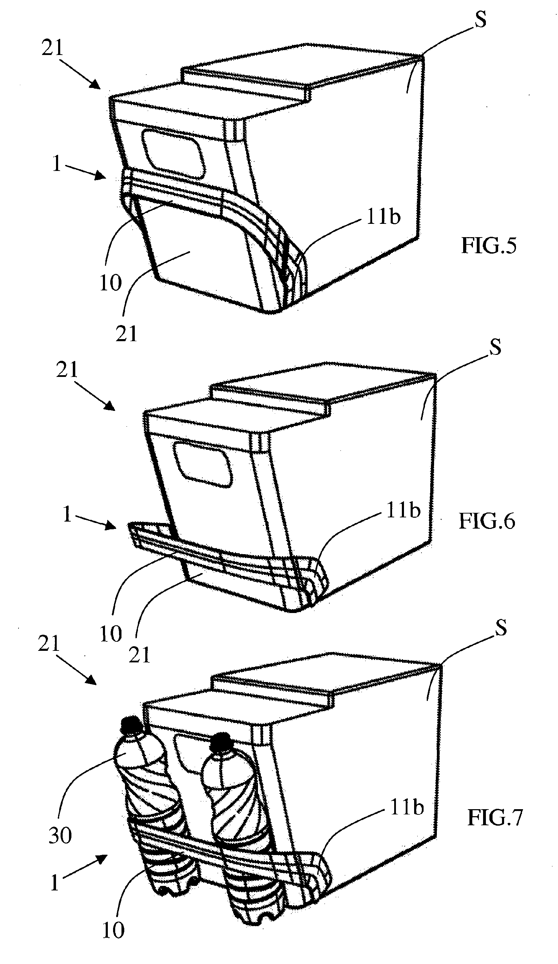

The free ends 10b and 11b are intended to be hinged to the internal container 20 of a vehicle cabin 100, with a common axis of rotation X, so that the handle 1 may rotate around the axis X between an open position of use (see figures 3, 4, 6, 7) and a closed or retracted position (see figures 2 and 5), wherein the middle grip part 10 of the handle overlaps a surface 21 of the internal container 20 of the vehicle to which the handle is hinged. Such part of the vehicle may be fixed or movable. When the internal container 20 of the vehicle cabin 100 is movable, the handle 1 has the main function to allow the grip and the movement of the movable internal container 20 of the vehicle cabin 100.

When the internal container 20 is fixed, for example when being part of the vehicle dashboard, the handle 1 performs the task of holding a passenger of the vehicle cabin 100.

It is evident that the handle as such, must have characteristics of solidity suitable to hold a passenger or to move the container 20. Such characteristics, obviously, are different from a common bottle holder dimensioned to just carry bottles and not to take higher stresses.

In order to mount the handle in the vehicle cabin, it is essential that there are at least two surfaces S parallel between each other to which the free ends 11b and 12b of the flanges 11 and 12 may be hinged.

Thus the container 20 may have substantially any shape, provided that it has two parallel surfaces, to which the flanges 11 and 12 and a surface 21 can be hinged, belonging to a bundle of planes which share a straight line perpendicular to said two surfaces S.

A further function of the handle is to contain one or two standard size 1.5L or 2L bottles 30 within the space comprised between the handle 1 itself, in open position, and said surface 21 of the internal container 20 of the vehicle cabin 100.

Advantageously when the handle is closed it does not clutter further the inside of the vehicle cabin 100.

Flanges 11 and 12 are retroverted and their length is such that, when a bottle is inserted between the handle 1 and the internal container 20 of the vehicle cabin, the middle grip part 10 corresponds to a middle part at level with the bottle. In other words, the projection h of the flanges 11 and 12 on the lying plane P identified by the middle grip part 10 corresponds to about half of the height of a standard size 1.5L or 2L bottle.

**It** is **also** appropriate to assemble the handle 1 to the internal container 20 of the vehicle cabin 100, so that there is not too much play between a bottle 30, the handle 1 and the internal container 20.

In order to improve the adaptability of the handle to hold bottles having different shapes or profiles, limiting the aforementioned play, with particular reference to figure 1, the internal area 10a of the middle part 10 of the handle 1, namely the part comprised between the flanges 11 and 12, is preferably provided with a shaped element 15 which defines, for example, two bottle seats 18 and 19 in correspondence of the ends 10b and 10c of the middle part 10, namely where such ends 10b and 10c are connected with the flanges 11 and 12.

Advantageously, such seats are suitable to keep the bottles spaced, so that a middle portion of the part 10 stays empty, facilitating the grip of the handle 1, in order to avoid any movement of the bottles 30 during bends or bumps of the road.

While the flanges 11 and 12 and the middle part 10 may be monolithic between each other, preferably the shaped element 15 is optionally realized separately and connected to the handle by glueing, by welding, by a fixed joint, or by any other method available to the person skilled in the art. This occurs because the shaped element is preferably made of a resilient material, such as vulcanized rubber or India rubber and the like. On the other hand, the handle may be made of a more rigid and robust material, from plastic such as polyethylene or ABS to metals and alloys, such as for example aluminium.

Thus, advantageously, bottles may be inserted and blocked by the shaped element 15, without necessarily having to rest their lower part on another surface.

Preferably, an intermediate area of the flanges 11 and 12 comprise an arching which makes the flanges 11 and 12 reciprocally introverted, namely convergent toward each other. Such arching makes the flanges elastic and allows to apply the same handle to containers or vehicle dashboards having slightly different size or to pairs of generic flat surfaces being parallel to each other at slightly different distances.

According to a preferred alternative embodiment of the invention, the ends 11b and 12b of the flanges 11 and 12 are preferably hinged to the internal container 20 by means of bolts comprising limit stop means, in order to limit the opening of the handle.

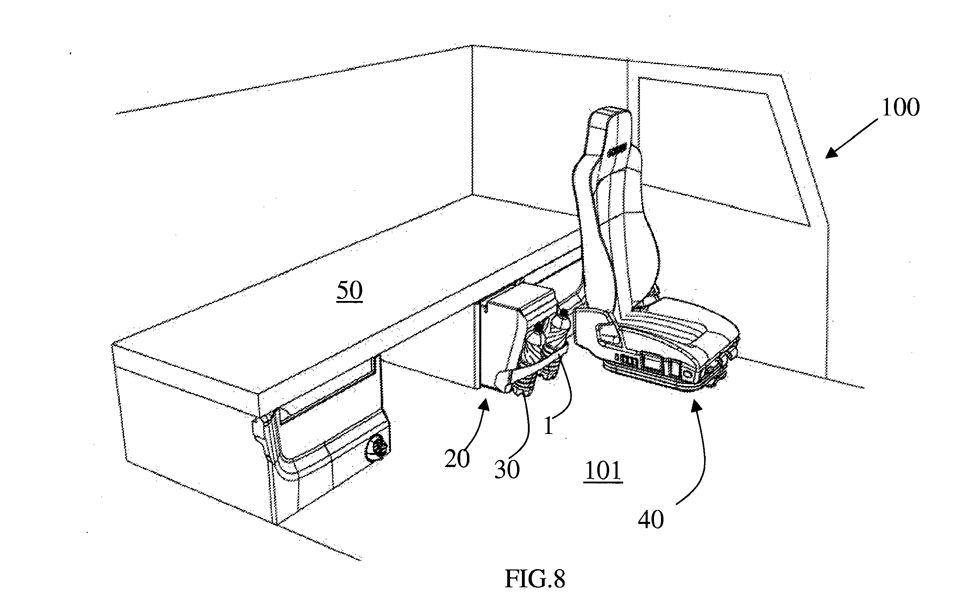

With particular reference to figure 8, the handle that is object of the present invention is preferably applied to a vehicle food container 20, preferably refrigerated, or a fridge.

According to a preferred arrangement, the vehicle cabin comprises at least a seat 40 turned towards the direction of travel and a bed 50 placed transversally with respect to the direction of travel of the vehicle, in a rear position with respect to the seat 40. The food container 20 is placed under the bed 50 and comprises sliding means, such as guides or rails, etc. which allow a forward or backward movement according to the longitudinal axis of the vehicle, according to the direction of travel. The handle 1, then, allows to take the food container 20 easily and to hold one or two standard size 1.5L or 2L bottles. When there are no bottles the handle may be raised in closed position, as shown in figures 2 and 5, overlapping the portion 10a on the surface 21 of the container 20, thus disappearing and minimizing its bulk.

In the example shown in figure 8, the food container 20 lies on the floor 101 of the vehicle cabin 100. Preferably it is slidingly constrained to the floor of the cabin.

The handle 1 may be assembled to the food container 20
- so that the floor 101 functions as a lower stop for the bottles 30, namely so that the handle does not stop the downward movement of the bottles, or
- so that the shaped element 15 stop the downward movement of the bottles, even if they are full, beyond an arrangement given by the user.

The advantages deriving from the use of this invention are evident.

A single component, such as the present handle 1, may advantageously be connected to pre-existing internal parts of a cabin in order to allow to hold a passenger, or to seize a movable part of the cabin and even to hold one or two bottles 30 when in open position. When in closed position, thus raised, the handle remarkably reduces its bulk and keeps the internal space of the vehicle cabin substantially unchanged.

## Claims

1. Internal handle for a vehicle cabin, in particular of an industrial or commercial vehicle, substantially U-shaped comprising
- a middle grip part (10), longitudinally shaped, defining a lying plane (P), and having two opposite ends (10b,10c),
- a pair of connection flanges (11,12) lying on respective lying planes parallel between each other and perpendicular to said lying plane (P), each flange being connected to one of said opposite ends (10b,10c) and comprising means for hinging the handle to an internal part (20) of a vehicle cabin,
**characterized in that** said middle part (10) comprises a portion (10a), between said flanges (11,12), defining at least one bottle holding seat (18,19).

2. Handle according to claim 1, wherein said middle part (10) portion (10a) defines a holding bottle seat (18,19) in correspondence of each one of said opposite ends (10b,10c).

3. Handle according to any of the previous claims, wherein said connection flanges deviates with respect to a direction perpendicular to said lying plane (P) according to an angle comprised between 1 and 50°.

4. Handle according to one of the previous claims, wherein said connection flanges (11,12) comprise free ends (11b,12b) accordingly arched in the respective lying planes parallel with each other.

5. Handle according to any of the previous claims, wherein said portion (10a), between said flanges (11,12), is made of resilient material such as vulcanized rubber or India rubber or the like.

6. Vehicular movable container having at least a pair of surfaces (S) parallel between each other, comprising a handle (1) according to any of the previous claims, hinged to said surfaces (S).

7. Container according to claim 6, wherein said connection flanges (11,12) are connected to the container (20) by means of hinges sharing the same axis of rotation (X), so that the handle can move between an open position, lowered to be used, and a closed position, raised.

8. Container according to claim 7, wherein in open position of the handle (1), said lying plane (P) is parallel to a surface (21) of the container (20).

9. Container according to one of the claims from 6 to 8, of the type refrigerated food container or fridge.

10. Container according to any of the claims from 6 to 9, wherein said handle (1) is connected to the container so that the shaped element (15) avoids the downward movement of the bottles (30), even full, beyond an arrangement given by a user, or connected so that the shaped element (15) allows the downward movement of the bottles (30).

11. Vehicle cabin (100) of an industrial or commercial vehicle, comprising a container (20) according to one of the claims from 6 to 9.

12. Vehicle cabin (100) according to claim 11, comprising a floor (101) and wherein said container (20) is associated to said floor by sliding means.

13. Vehicle cabin (100) according to claim 12, wherein when said handle is suitable to allow the downward movement of said bottles (30), the floor (101) of the cabin defines a stop surface for the bottles (30).

14. Vehicle cabin (100) according to one of the claims from 11 to 13, further comprising at least a seat (40) turned towards the direction of travel of a vehicle comprising the cabin, a bed (50) placed behind the seat (40) transversally to said direction of travel and said container (20) equipped with a handle (1); the container being fixed to the floor so that it can slide backwards, under the bed, and forwards according to said direction of travel.

15. Industrial or commercial vehicle, comprising a vehicle cabin (100) according to one of the claims from 11 to 13.

## Patentansprüche

1. Innengriff für eine Fahrzeugkabine, insbesondere eines gewerblichen oder Nutzfahrzeugs, im Wesentlichen U-förmig, umfassend:
- ein mittleres Griffteil (10), das längs geformt ist, eine Liegeebene (P) definiert und zwei gegenüberliegende Enden (10b, 10c) besitzt,
- ein Paar von Verbindungsflanschen (11, 12), die an jeweiligen Liegeebenen parallel zueinander und rechtwinklig zu der Liegeebene (P) liegen, wobei jeder Flansch mit einem der gegenüberliegenden Enden (10b, 10c) verbunden ist und ein Mittel zum Anlenken des Griffs an einem Innenteil (20) einer Fahrzeugkabine umfasst,
**dadurch gekennzeichnet, dass** das Mittelteil (10) einen Abschnitt (10a) zwischen den Flanschen (11, 12) umfasst, das zumindest einen Flaschenhaltesitz (18, 19) definiert.

2. Griff nach Anspruch 1, wobei der Abschnitt (10a) des Mittelteils (10) einen Halteflaschensitz (18, 19) entsprechend jedem der gegenüberliegenden Enden (10b, 10c) definiert.

3. Griff nach einem der vorhergehenden Ansprüche, wobei die Verbindungsflansche in Bezug auf eine Richtung rechtwinklig zu der Liegeebene (P) gemäß einem Winkel abweichen, der zwischen 1 und 50° umfasst.

4. Griff nach einem der vorhergehenden Ansprüche, wobei die Verbindungsflansche (11, 12) freie Enden (11b, 12b) umfassen, die entsprechend in den jeweiligen Liegeebenen parallel zueinander gewölbt sind.

5. Griff nach einem der vorhergehenden Ansprüche, wobei der Abschnitt (10a) zwischen den Flanschen (11, 12) aus nachgiebigem Material besteht, wie Gummi oder Kautschuk oder dergleichen.

6. Bewegbarer Fahrzeugbehälter mit zumindest einem Paar von Flächen (S) parallel zueinander, der einen Griff (1) nach einem der vorhergehenden Ansprüche umfasst, der an den Flächen (S) angelenkt ist.

7. Behälter nach Anspruch 6, wobei die Verbindungsflansche (11, 12) mit dem Behälter (20) mittels von Gelenken verbunden sind, die dieselbe Drehachse (X) gemeinsam haben, so dass sich der Griff zwischen einer offenen Position, zur Verwendung abgesenkt, und einer geschlossenen Position, angehoben, bewegen kann.

8. Behälter nach Anspruch 7, wobei in der offenen Position des Griffs (1) die Liegeebene (P) parallel zu einer Fläche (21) des Behälters (20) ist.

9. Behälter nach einem der Ansprüche 6 bis 8 des Typs, der ein gekühlter Nahrungsmittelbehälter oder ein Kühlschrank ist.

10. Behälter nach einem der Ansprüche 6 bis 9, wobei der Griff (1) mit dem Behälter so verbunden ist, dass das geformte Element (15) die Abwärtsbewegung der Flaschen (30), sogar im vollen Zustand, über eine Anordnung hinaus vermeidet, die von einem Anwender gegeben ist, oder so verbunden ist, dass das geformte Element (15) die Abwärtsbewegung der Flaschen (30) zulässt.

11. Fahrzeugkabine (100) eines gewerblichen oder Nutzfahrzeugs, umfassend einen Behälter (20) nach einem der Ansprüche 6 bis 9.

12. Fahrzeugkabine (100) nach Anspruch 11, ferner mit einem Boden (101), und wobei der Behälter (20) dem Boden durch ein Gleitmittel zugeordnet ist.

13. Fahrzeugkabine (100) nach Anspruch 12, wobei, wenn der Griff geeignet ist, um die Abwärtsbewegung der Flaschen (30) zuzulassen, der Boden (101) der Kabine eine Anschlagfläche für die Flaschen (30) definiert.

14. Fahrzeugkabine (100) nach einem der Ansprüche 11 bis 13, ferner mit zumindest einem Sitz (40), der zu der Fahrtrichtung eines Fahrzeugs gedreht ist, das die Kabine umfasst, einem Bett (50), das hinter dem Sitz (40) quer zu der Fahrtrichtung platziert ist, und den Behälter (20), der mit einem Griff (1) ausgestattet ist; wobei der Behälter an dem Boden so fixiert ist, dass er rückwärts unter das Bett und vorwärts gemäß der Fahrtrichtung gleiten kann.

15. Gewerbliches oder Nutzfahrzeug, mit einer Fahrzeugkabine (100) nach einem der Ansprüche 11 bis 13.

## Revendications

1. Poignée interne pour une cabine de véhicule, en particulier d'un véhicule industriel ou commercial, sensiblement en forme de U, comprenant
une partie de préhension médiane (10), configurée longitudinalement, définissant un plan de couchage (P), et ayant deux extrémités opposées (10b, 10c),
une paire de brides de connexion (11, 12) situées sur des plans de couchage respectifs parallèles entre eux et perpendiculaires audit plan de couchage (P), chaque bride étant connectée à une desdites extrémités opposées (10b, 10c) et comprenant des moyens pour articuler la poignée à une partie interne (20) d'une cabine de véhicule,
**caractérisée en ce que** ladite partie médiane (10) comprend une portion (10a), entre lesdites brides (11, 12) définissant au moins un siège de retenu de bouteille (18, 19).

2. Poignée selon la revendication 1, dans laquelle ladite portion (10a) de la partie médiane (10) définit un siège de retenu de bouteille (18, 19) en correspondance avec chacune desdites extrémités opposées (10b, 10c).

3. Poignée selon l'une quelconque des revendications précédentes, dans laquelle lesdites brides de connexion dévient par rapport à une direction perpendiculaire audit plan de couchage (P) selon un angle compris entre 1 et 50°.

4. Poignée selon l'une quelconque des revendications précédentes, dans laquelle lesdites brides de connexion (11, 12) comprennent des extrémités libres (11b, 12b) arquées d'une manière correspondante dans des plans de couchage respectifs parallèles l'une à l'autre.

5. Poignée selon l'une quelconque des revendications précédentes, dans laquelle ladite portion (10a), entre lesdites brides (11, 12) est réalisée en matériau résilient, comme en caoutchouc vulcanisé ou caoutchouc naturel ou analogue.

6. Contenant véhiculaire mobile ayant au moins une paire de surfaces (S) parallèles l'une à l'autre, comprenant une poignée (1) selon l'une quelconque des revendications précédentes, articulée auxdites surfaces (S).

7. Contenant selon la revendication 6, dans lequel lesdites brides de connexion (11, 12) sont connectées au contenant (20) au moyen d'articulations partageant le même axe de rotation (X), de sorte que la poignée peut se déplacer entre une position ouverte, abaissée pour l'utilisation, et une position fermée, relevée.

8. Contenant selon la revendication 7, dans lequel, en position d'ouverture de la poignée (1), ledit plan de couchage (P) est parallèle à une surface (21) du contenant (20).

9. Contenant selon l'une des revendications 6 à 8, du type contenant des aliments réfrigérés ou réfrigérateur.

10. Contenant selon l'une quelconque des revendications 6 à 9, dans lequel ladite poignée (1) est connectée au contenant de telle sorte que l'élément configuré (15) empêche un mouvement vers le bas des bouteilles (30), même pleines, au-delà d'un agencement fourni par un utilisateur, ou est connectée de telle sorte que l'élément configuré (15) permet le mouvement vers le bas des bouteilles (30).

11. Cabine de véhicule (100) d'un véhicule industriel ou commercial, comprenant en contenant (20) selon l'une des revendications 6 à 9.

12. Cabine de véhicule (100) selon la revendication 11, comprenant un plancher (101), et où ledit contenant (20) est associé audit plancher par des moyens coulissants.

13. Cabine de véhicule (100) selon la revendication 12, dans laquelle, lorsque ladite poignée permet le mouvement vers le bas desdites bouteilles (30), le plancher (101) de la cabine définit une surface d'arrêt pour les bouteilles (30).

14. Cabine de véhicule (100) selon l'une des revendications 11 à 13, comprenant en outre au moins un siège (40) tourné vers la direction de déplacement d'un véhicule comprenant la cabine, un lit (50) placé derrière le siège (40) transversalement à ladite direction de déplacement, et ledit contenant (20) étant équipé d'une poignée (1) ; le contenant étant fixé au plancher de telle sorte qu'il peut coulisser vers l'arrière, sous le lit, et vers l'avant en accord avec ladite direction de déplacement.

15. Véhicule industriel ou commercial, comprenant une cabine de véhicule (100) selon l'une des revendications 11 à 13.
